# NOUVEAU FASCICULE DE BREVET EUROPEEN

(11) **EP 3 072 175 B2**
(45) Date de publication et mention de la décision concernant l'opposition: **26.01.2022**
(45) Mention de la délivrance du brevet: 22.08.2018
(21) Numéro de dépôt: 14814939.6
(22) Date de dépôt: 21.11.2014
(51) Int. Cl.: H01M 6/50, H01M 12/06

(54) **BATTERIE À ÉLECTRODE À AIR EXTRACTIBLE**
BATTERIE MIT ABNEHMBARER LUFTELEKTRODE
BATTERY HAVING REMOVABLE AIR ELECTRODE

(30) Priorité: 22.11.2013 FR 1361516
(43) Date de publication de la demande: 28.09.2016
(73) Titulaire: Electricité de France, 75008 Paris (FR)
(72) Inventeur: TOUSSAINT, Gwenaëlle, F-77140 Nemours (FR); STEVENS, Philippe, F-77940 Noisy Rudignon (FR); DESHAYES, Sophie, F-77370 Rampillon (FR)
(74) Mandataire: Plasseraud IP
(86) Numéro de dépôt international: PCT/FR2014/053002
(87) Numéro de publication internationale: WO 2015/075401

(56) Documents cités:
- WO-A2-2013/066828
- WO-A2-2013/066829
- FR-A1- 2 768 264
- US-A- 4 828 939
- US-A- 4 957 826
- US-A- 5 190 833
- US-A- 5 318 861
- US-A- 5 328 778
- US-A- 5 418 080
- US-A- 5 418 080
- US-A1- 2005 123 815
- US-A1- 2011 086 278
- US-B1- 6 355 369
- US-B2- 6 869 710

## Description

### Domaine de l'invention

La présente invention concerne le domaine technique des batteries comprenant une électrode à air et plus particulièrement des batteries comprenant un boitier et à l'intérieur de ce dernier une électrode à air, un électrolyte liquide et l'électrode négative. Cette électrode négative peut être une électrode métallique.

### État de la technique

Les batteries métal-air font partie des batteries comprenant une électrode à air et utilisent une électrode négative métallique, à base par exemple de zinc, de fer ou de lithium, couplée à l'électrode à air. Lors de la décharge, les réactions suivantes se produisent :

| | |
|---|---|
| M → Mⁿ⁺ + n·e⁻ | électrode négative (électrode métallique) |
| O₂ + 2·H₂O + 4·e⁻ → 4·OH⁻ | électrode positive (électrode à air). |

Ainsi, de l'oxygène est réduit au niveau de l'électrode à air et le métal de l'électrode négative est oxydé. Le plus souvent, un électrolyte aqueux alcalin est utilisé.

Ces batteries métal-air ont plusieurs applications, par exemple les batteries zinc-air sont commercialisées pour une utilisation dans des prothèses auditives.

De nombreux travaux ont été effectués depuis plusieurs décennies pour la mise au point et l'optimisation d'électrodes à air permettant de réaliser des générateurs électrochimiques de type métal-air, connus pour leurs énergies massiques élevées, pouvant atteindre plusieurs centaines de Wh/kg.

Les électrodes à air sont également utilisées dans des piles à combustible alcalines.

Une électrode à air permet d'utiliser en tant qu'agent oxydant pour la réaction électrochimique l'air de l'atmosphère, disponible en quantité illimitée en tout lieu et à tout moment.

Une électrode à air est une structure solide poreuse en contact avec l'électrolyte liquide, qui est généralement une solution alcaline. L'interface entre l'électrode à air et l'électrolyte liquide est une interface dite « à triple contact » où sont présents simultanément la matière solide active de l'électrode, l'oxydant gazeux (air) et l'électrolyte liquide.

Une description des différents types d'électrodes à air pour batteries zinc-air est exposée par exemple dans l'article bibliographique de V. Neburchilov et al., intitulé « A review on air cathodes for zinc-air fuel cells » (en français : « Inventaire des cathodes à air pour cellules à combustible zinc-air »), Journal of Power Sources, 195 (2010), pages 1271 à 1291.

Lorsqu'une batterie métal air doit être chargée électriquement, le sens du courant est inversé et les réactions suivantes se produisent :

| | |
|---|---|
| Mⁿ⁺ + n·e⁻ → M | électrode négative (électrode métallique) |
| 4·OH⁻→ O₂ + 2·H₂O + 4·e⁻ | électrode positive (électrode à air) |

Ainsi, de l'oxygène est produit au niveau de l'électrode positive et le métal est redéposé par réduction sur l'électrode négative.

Bien que ces batteries fonctionnent sans problème majeur en phase de décharge, elles ne sont pas stables en phase de charge ; le point faible de la batterie métal-air lors de la phase de charge est l'électrode à air qui n'est pas conçue pour être utilisée en sens inverse (c'est-à-dire en oxydation).

En effet, l'électrode à air a une structure poreuse et fonctionne sous forme d'électrode volumique dans laquelle la réaction électrochimique a lieu dans le volume de l'électrode, à l'interface entre un gaz (l'oxygène de l'air), un liquide (l'électrolyte) et un solide (la matière active de l'électrode et éventuellement un catalyseur) : c'est le triple contact. Cette structure poreuse est importante car elle confère une grande surface de réaction nécessaire, et donc une grande densité de courant, car la densité de l'oxygène gazeux est faible par rapport à un liquide. Par exemple, la densité molaire de l'oxygène dans l'air est égale à environ 0,03 mol/L alors que l'eau a une densité de 55 mol/L.

Ainsi, de manière générale, une électrode à air est fabriquée à partir de grains de carbone à haute surface, tel que le Vulcan^{®} XC72 commercialisé par la société Cabot. La surface du carbone peut en outre être davantage augmentée par réaction avec un gaz, tel que le CO₂, avant son intégration dans l'électrode à air. Les grains de carbone sont ensuite agglomérés pour former l'électrode à air à l'aide d'un polymère hydrophobe fluoré, tel qu'un copolymère éthylène-propylène fluoré (FEP) commercialisé par la société Dupont. Le document WO 2000/036677 décrit une telle électrode pour batterie métal-air.

Cette grande surface de réaction n'est pas nécessaire pour la réaction inverse d'oxydation au niveau de l'électrode positive lors de la phase de charge puisque la concentration en matière active est beaucoup plus élevée. Bien au contraire, la structure poreuse de l'électrode à air présente l'inconvénient d'être fragile : il a été observé par les inventeurs que la structure poreuse de l'électrode à air était détruite mécaniquement par le dégagement d'oxygène gazeux quand elle était utilisée pour l'oxydation de l'électrolyte liquide en oxygène. En effet, la pression hydraulique générée au sein de l'électrode à air par la production d'oxygène gazeux est suffisante pour provoquer une rupture des liaisons entre les grains de carbone constituant l'électrode à air.

Il a également été observé par les inventeurs que le catalyseur, qui est ajouté à l'électrode à air pour améliorer le rendement énergétique de la réaction de réduction de l'oxygène tel que l'oxyde de manganèse ou de cobalt, n'est pas stable au potentiel nécessaire à la réduction de l'oxygène. Par ailleurs, une corrosion par oxydation du carbone a lieu en présence d'oxygène et est accélérée à des potentiels élevés.

Pour pallier cela, certains auteurs utilisent un catalyseur de réduction d'oxygène plus résistant couplé à un catalyseur de dégagement d'oxygène dans des électrodes bifonctionnelles composées de deux couches couplées électriquement (voir par exemple le brevet US 5306579). Malheureusement, ces électrodes bifonctionnelles ont une durée de vie faible et un nombre de cycles limité parce que la structure de ces électrodes ne résiste pas aux dégagements de gaz produits sur de longues périodes et parce que le catalyseur n'est pas stable et le carbone se corrode aux potentiels appliqués pendant la charge.

Ces dégradations de l'électrode à air lors de la phase de charge réduisent fortement sa durée de vie et sont l'une des principales raisons qui empêche le développement commercial d'accumulateurs métal-air rechargeables électriquement.

Par conséquent, la durée de vie de l'électrode à air est plus courte que celle de l'électrode métallique pour les batteries/piles utilisés alternativement en mode décharge et charge. Or, il serait dommage de devoir jeter la batterie/pile alors que l'électrode métallique est encore utilisable.

De manière générale, le problème lié au dégagement gazeux lors de la charge au niveau de l'électrode à air se rencontre pour toute batterie comprenant une électrode à air.

### Présentation de l'invention

Ainsi, l'un des objectifs de la présente invention est de pallier au moins un inconvénient de l'état de la technique décrit ci-dessus.

Pour cela, la présente invention propose un compartiment cathodique pour batterie à électrode à air, comprenant une électrode à air et adapté pour être inséré dans un boitier de la batterie de manière extractible. L'électrode à air est sous forme de plaque et le compartiment cathodique étanche aux liquides. Le compartiment cathodique comprend en outre une connexion électrique pour relier l'électrode à air à un pôle positif d'une batterie, et une cassette creuse présentant une arrivée d'air et une sortie d'air, avec au moins une face plane formée au moins en partie par l'électrode à air, comprenant en outre un rebord sur sa face formée au moins en partie par l'électrode à air de la cassette, ledit rebord étant formé vers l'extérieur du compartiment cathodique.

Ainsi, l'électrode à air est comprise dans un compartiment cathodique extractible. Il est alors possible de continuer à utiliser l'électrode négative, notamment l'électrode métallique d'une batterie métal-air, de manière simple quand l'électrode à air est en fin de vie. En effet, il n'est pas besoin de démonter l'ensemble de la batterie/pile pour remplacer l'électrode à air.

D'autres caractéristiques optionnelles et non limitatives du compartiment cathodique sont les suivantes.

Le compartiment cathodique comprend un rebord sur sa face formée au moins en partie par l'électrode à air de la cassette pour limiter la compression de l'électrode négative, notamment lorsque celle-ci est métallique.

Le compartiment cathodique comprend avantageusement en outre une électrode à air additionnelle sous forme d'une plaque formant au moins en partie une autre face de la cassette creuse, l'autre face étant opposée à la face formée au moins en partie par l'électrode à air.

Le compartiment cathodique comprend avantageusement un renfort mécanique alvéolé disposé à l'intérieur de la cassette en appuis sur l'électrode à air.

Le compartiment cathodique peut présenter une partie inférieure et une partie supérieure, la partie inférieure comprenant la ou les électrodes à air et la partie supérieure ayant au moins une section inférieure à la section de la partie inférieure.

L'invention propose également une batterie rechargeable selon la revendication 5 comprenant un boitier et à l'intérieur de ce dernier :
- une électrode à air ;
- une électrode négative ; et
- un électrolyte; et
dans laquelle l'électrode à air est extractible hors du boitier et intégrée à un compartiment

Ainsi, lorsque l'électrode à air arrive en fin de vie, il est facile de la remplacer.

D'autres caractéristiques optionnelles et non limitatives de la batterie sont les suivantes.

Dans le cas où l'électrode négative est une électrode métallique, l'électrolyte un électrolyte liquide, le compartiment cathodique est mobile à l'intérieur du boitier. La batterie comprend alors un séparateur isolant électriquement entre l'électrode à air et l'électrode métallique et un élément résilient. Le séparateur, le compartiment cathodique et l'électrode métallique sont agencés de sorte que l'élément résilient agisse sur le compartiment cathodique pour que celui-ci comprime l'électrode métallique par sa face formée au moins en partie par l'électrode à air. Cet élément résilient peut être le boitier de la batterie ou un système de compression disposé contre une paroi du boitier.

La batterie comprend avantageusement une deuxième électrode à air intégrée dans un deuxième compartiment cathodique mobile et extractible tel que décrit ci-dessus et un deuxième séparateur isolant électriquement entre la deuxième électrode à air et l'électrode métallique. Les deux compartiments cathodiques et l'électrode métallique sont agencés de sorte que l'électrode métallique soit comprimée entre les deux compartiments cathodiques par leurs faces formées au moins en partie par les électrodes à air.

La batterie peut comprendre en outre une deuxième électrode positive pour la charge de la batterie. Auquel cas, la deuxième électrode positive est avantageusement disposée entre le compartiment cathodique et l'électrode négative. La batterie comprend alors en outre au moins un écarteur placé au contact de la deuxième électrode positive pour faciliter l'évacuation des bulles d'oxygène produites sur la deuxième électrode positive lors de la charge. Deux écarteurs peuvent, en variante, être disposés de part et d'autre de l'électrode positive. Aussi, l'écarteur peut être prévu contre une face de la deuxième électrode positive tournée vers l'électrode négative, respectivement vers l'électrode à air. Dans ce cas, la batterie comprend en outre au moins une protection mécanique disposée entre l'écarteur et l'électrode négative, respectivement l'électrode à air pour leur protection contre l'écarteur.

### Dessins

D'autres objectifs, caractéristiques et avantages apparaitront à la lumière de la description qui suit en référence aux dessins donnés à titre illustratif et non limitatif, parmi lesquels :
- la figure 1 représente schématiquement un compartiment cathodique utilisé dans la batterie selon la revendication 5;
- la figure 2 représente schématiquement en coupe le compartiment cathodique mis en œuvre dans la batterie selon la revendication 5 comprenant une électrode à air et un renfort mécanique alvéolé ;
- la figure 3 représente schématiquement en coupe le compartiment cathodique mis en œuvre dans la batterie selon la revendication 5 comprenant deux électrodes à air et un renfort mécanique alvéolé ;
- la figure 4 représente schématiquement en coupe le compartiment cathodique selon l'invention comprenant une électrode à air, un renfort mécanique alvéolé et dont la cassette présente un rebord ;
- la figure 5 représente schématiquement un mode de réalisation d'une batterie selon la présente invention comprenant un boitier, une électrode métallique, deux compartiments cathodiques de la figure 2 et deux séparateurs ;
- la figure 6 représente schématiquement un mode de réalisation d'une batterie selon la présente invention comprenant un boitier, une électrode métallique, deux compartiments cathodiques de la figure 4 et deux séparateurs ;
- la figure 7 représente schématiquement un mode de réalisation d'une batterie selon la présente invention comprenant un boitier, deux électrodes métalliques, deux compartiments cathodiques de la figure 2, un compartiment cathodique de la figure 3 et quatre séparateurs ;
- la figure 8 représente schématiquement un mode de réalisation d'une batterie selon la présente invention comprenant un boitier, deux électrodes métalliques, deux compartiments cathodiques de la figure 2, un compartiment cathodique de la figure 3, quatre séparateurs et un système de compression ;
- la figure 9 représente schématiquement un mode de réalisation d'une batterie selon la présente invention comprenant un boitier, une électrode métallique, deux compartiments cathodiques de la figure 2, deux deuxièmes électrodes positives, et quatre séparateurs ;
- la figure 10 représente schématiquement un mode de réalisation d'une batterie selon la présente invention comprenant un boitier, une électrode métallique, deux compartiments cathodiques de la figure 2, deux deuxièmes électrodes positives, quatre protections mécaniques, et quatre écarteurs ;
- la figure 11 représente schématiquement une batterie selon la présente invention dans laquelle le compartiment cathodique présente une partie supérieure et une partie inférieure, la section de la partie supérieure diminuant à mesure que l'on s'éloigne de la partie inférieure ; et
- la figure 12 représente schématiquement une batterie selon la présente invention dans laquelle le compartiment cathodique présente une partie supérieure et une partie inférieure, toutes deux rectangulaires, la section de la partie supérieure étant inférieure à la section de la partie inférieure formant ainsi un épaulement à l'interface de celles-ci.

### Description

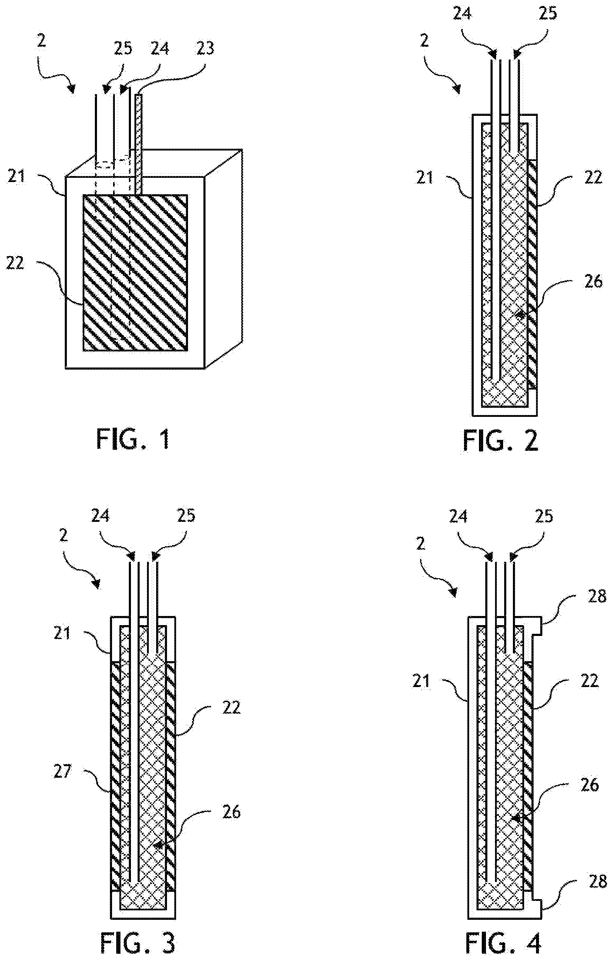

Une batterie à électrode à air selon l'invention est décrite ci-après en référence aux figures 1 à 12. De manière générale le terme de « batterie » est utilisé ici pour désigner tout élément électrique permettant de stocker de l'énergie sous forme chimique et de la restituer sous forme électrique. Ainsi, ce terme englobe également les termes de « pile », « pile à combustible », « pile à combustible régénérative » et « accumulateur ».

Une telle batterie **1** comprend un boitier **11** et, à l'intérieur de ce dernier, une électrode à air extractible **22,** une électrode négative **3** et un électrolyte **4**.

L'électrode à air **22** peut ainsi être ôtée du boitier **11,** par exemple de manière coulissante, pour son remplacement quand elle arrive en fin de vie ou est détériorée, dû au fait par exemple que la structure en grains de carbone agglomérés est trop endommagée. L'électrode à air **22** est mobile à l'intérieur du boitier **11,** notamment pour permettre la compression de l'électrode négative **3** tel qu'il sera décrit plus en détail ci-après.

L'électrode à air **22** est de préférence en un matériau poreux conducteur d'électrons. Ce matériau poreux est par exemple un composé de noir de carbone, d'un catalyseur à base d'oxyde de manganèse ou de cobalt, d'un liant hydrophobe tel que le HFP (hexafluoropropylène) ou PTFE (polytétrafluoroéthylène), et d'un collecteur de courant tel un collecteur sous forme d'une grille de nickel. Un polymère conducteur d'anions peut être ajouté dans l'électrode tel que décrit dans le brevet WO 2010/128242 A1, notamment lorsque l'électrolyte est aqueux. Ce polymère a la fonction d'empêcher la carbonatation de l'électrolyte aqueux par le CO₂ contenu dans l'air. Le liant hydrophobe a la double fonction de produire une structure poreuse intègre mécaniquement à partir d'une poudre dont la percolation électronique est assurée par contact entre les grains de carbone, et d'être suffisamment hydrophobe pour empêcher l'électrolyte de traverser l'électrode lorsque celui-ci est liquide.

L'électrode négative **3** est une électrode métallique comme dans le cas d'une batterie métal-air. La matière de l'électrode métallique est de préférence le zinc, le fer ou le lithium. L'électrolyte est un électrolyte liquide.

La batterie **1** comprend un compartiment cathodique **2** comprenant une cassette **21** creuse et une connexion électrique **23** pour connecter l'électrode à air **22** au pôle positif de la batterie **1** (voir les figures 1 à 4). Le compartiment cathodique **2** est adapté pour être inséré dans le boitier **11** de la batterie de manière extractible. Le compartiment cathodique **2** est de préférence étanche aux liquides, par exemple à l'électrolyte liquide **4** de la batterie **1,** notamment lorsque le compartiment cathodique **2** est prévu pour comprimer l'électrode négative **3** comme il sera décrit ci-dessous.

La cassette **21** présente ainsi une cavité dans laquelle l'air peut circuler. La cassette **21** présente également une arrivée d'air **24** et une sortie d'air **25** pour la circulation d'air dans la cassette **21** et au contact de l'électrode à air **22**. L'air utilisé pour alimenter la cassette **21** peut être non-traité, ou traité pour être, par exemple, humidifié, séché, décarbonaté (suppression du CO₂) ou enrichi en oxygène.

L'électrode à air **22** est intégrée dans le compartiment cathodique **2** de manière étanche sous la forme d'une plaque formant au moins en partie l'une des faces de la cassette **21**. La cassette **21** pouvant alors être de forme cylindrique avec au moins une face plane formée au moins en partir par l'électrode à air **22**. Dans ce cas la cassette **21** peut être extractible de manière coulissante perpendiculairement à l'apothème du cylindre

Ainsi, le remplacement de l'électrode à air **22** extractible peut être réalisé de manière aisée en ôtant simplement le compartiment cathodique **2**.

En variante, une électrode à air **27** additionnelle peut être prévue dans le compartiment cathodique **2**. Cette deuxième électrode à air **27** additionnelle forme au moins en partie une deuxième face de la cassette **21** opposée à la face formée au moins en partie par la première électrode à air **22** (voir la figure 3). Dans ce cas, la cassette **21** a de préférence une forme cylindrique avec deux faces planes parallèles.

Le compartiment cathodique **2** peut comprendre en outre un renfort mécanique **26** alvéolé à l'intérieur de la cassette **21** pour son renforcement. Ce renfort mécanique **26** est en appuis sur l'électrode à air **22**.

Ce renfort mécanique **26** est particulièrement avantageux lorsque l'électrode négative **3** est une électrode métallique sous forme de plaque et que le compartiment cathodique **2** et l'électrode métallique **3** sont agencés de sorte que le compartiment cathodique **2** comprime l'électrode métallique **3** par sa face formée au moins en partie par l'électrode à air **22,** par exemple contre une paroi du boitier **11,** en empêchant la déformation de l'électrode à air **22** lors de la compression de l'électrode métallique **3**.

Dans un tel mode de réalisation, la batterie **1** comprend un séparateur **5** isolant électriquement l'électrode à air **22** de l'électrode métallique **3** et disposé entre celles-ci. Le séparateur **5** est un élément en un matériau isolant électriquement et conducteur d'ions, par exemple un polyélectrolyte c'est-à-dire un polymère comprenant des groupements chargés. En variante, il peut également être en un matériau isolant électriquement et perméable à l'électrolyte liquide, par exemple un feutre. Le séparateur **5** peut être prévu fixé à l'électrode à air **22** et/ou à l'électrode négative **3**. Par ailleurs, la batterie **1** comprend un élément résilient agissant sur le compartiment cathodique **2** pour le maintenir contre l'électrode négative **3** à travers le séparateur **5**.

La compression de l'électrode métallique **3** est avantageuse pour les raisons suivantes. Lors de la phase de charge d'une batterie métal-air, l'ion métallique est réduit en métal au niveau de l'électrode négative qui s'y dépose lorsque le potentiel au niveau de cette électrode négative le permet. Or, dans certaines conditions, le métal se dépose sous forme de mousse peu adhérente à la surface de l'électrode métallique. Cette mousse peu adhérente peut se détacher de l'électrode provoquant une perte de matière active et par conséquent une diminution de la capacité de la batterie. Les inventeurs ont observé qu'une compression de l'électrode métallique pendant la phase de charge limitait la formation de cette mousse peu adhérente. Par ailleurs cette compression empêche également l'électrode métallique de se déformer pendant les cycles répétés de charge et de décharge en assurant une répartition uniforme, homogène et dense du dépôt de métal sur l'électrode métallique.

L'élément résilient peut être formé par le boitier **11** de la batterie. Les éléments qui sont placés à l'intérieur du boitier **11** y sont insérés en force. L'élément résilient peut également être réalisé sous forme d'un système de compression **6**. Ce système de compression **6** est disposé contre une paroi du boitier **11** et un autre élément de la batterie **1,** par exemple le compartiment cathodique **2** ou l'électrode métallique **3**. Le système de compression **6** permet d'assurer la compression de l'électrode métallique **3** une fois que le compartiment cathodique **2** et l'électrode métallique **3** sont en place et après son insertion. Le système de compression **6** est avantageusement réalisé dans un matériau résilient, par exemple une mousse résiliente. Un exemple de mousse résiliente serait par exemple une mousse de poly(chloroprène) (aussi dénommée Néoprène^{®}), de préférence les mousses de néoprène commercialisées sous la dénomination Bulatex^{®}, en particulier Bulatex C166, par la société Hutchinson. Un autre exemple d'une telle mousse serait le produit Sylomer^{®} G, une mousse de poly(éther uréthane) commercialisée par la société Plastiform's. La mousse est de préférence de porosité fermée et isolée de l'électrolyte liquide. Elle est donc de préférence placée dans une pochette souple, étanche, et stable en contact avec l'électrolyte liquide. Par exemple une pochette en polyethylène extrudé thermo-soudable.

Le système de compression **6** peut être prévu extractible et permet alors après son retrait de retirer plus aisément le ou les compartiments cathodiques **2**.

La batterie **1** peut comporter deux compartiments cathodiques **2** tels que décrits ci-dessus. Dans le cas d'une batterie **1** comprenant une électrode métallique en tant qu'électrode négative **3,** l'électrode métallique **3** sous forme de plaque peut être comprimée entre les faces formées au moins en partie par une électrode à air **22** des deux compartiments cathodiques **2**. Des séparateurs **5** isolent électriquement l'électrode métallique **3** des électrodes à air **22**.

Dans une autre variante encore, le compartiment cathodique **2** peut comporter deux électrodes à air **22, 27** de la manière décrite ci-dessus et la batterie **1** deux électrodes négatives **3** sous forme de plaque disposées de part et d'autre du compartiment cathodique **2** et éventuellement, dans le cas d'électrode métallique chacune contre une face formée au moins en partie par une électrode à air **22, 27**. Dans ce dernier cas, le compartiment cathodique **2** peut comprimer en même temps l'une et l'autre des électrodes métalliques **3** de la même manière que décrite ci-dessus.

La cassette **21** du compartiment cathodique **2** peut comprendre, de manière avantageuse lorsque l'électrode négative **3** est une électrode métallique, un rebord **28** sur sa face formée au moins en partie par l'électrode à air **22** pour limiter la compression de l'électrode métallique **3**.

Dans le cas où l'électrode métallique **3** est comprimée entre le compartiment cathodique **2** et une paroi du boitier **11,** le compartiment cathodique **2** comprime l'électrode métallique **3** en direction de la paroi du boitier **11** jusqu'à ce que le rebord **28** entre en contact avec celle-ci.

Dans le cas où l'électrode métallique **3** est comprimée entre deux compartiments cathodiques **2,** soit un seul des deux compartiments **2** présente un rebord **28,** soit les deux compartiments cathodiques **2** présentent un rebord **28**. Dans le premier cas, le rebord **28** entrera an contact avec la face de la cassette **21** de l'autre compartiment cathodique **2** sans rebord, comme mentionné ci-dessus pour le rebord **28** et la paroi du boitier. Dans le deuxième cas, les rebords **28** sont prévus sur les faces des cassettes **21** de manière à se faire face, de sorte que les deux compartiments cathodiques **2** compriment l'électrode métallique **3** jusqu'à ce que les deux rebords **28** entrent en contact l'un avec l'autre.

Dans le cas où le compartiment cathodique **2** comprend deux électrodes à air **22** formant au moins en partie des faces opposées de la cassette **21,** il peut comprendre un rebord **28** sur l'une des faces mais pas l'autre, ou un rebord **28** sur chacune des faces. Le ou les rebords agissent de la même manière que décrite ci-dessus.

Le compartiment cathodique **2** peut comprendre une partie inférieure **2_{INF}** et une partie supérieure **2_{SUP}**, la partie inférieure **2_{INF}** comprenant la ou les électrodes à air **22**. La partie supérieure **2_{SUP}** présente au moins une section perpendiculaire au plan de l'électrode à air inférieure à celle de la partie inférieure **2_{INF}**. Ainsi, au niveau de la partie supérieure **2_{SUP}** du compartiment cathodique **2,** un espace plus ample est prévu dans le boitier **11** de la batterie **1** pour recueillir l'électrolyte liquide **4**. Ceci permet à la fois un format plus compact pour la batterie **1**. Également, le volume additionnel créé par la différence de section des parties supérieure **2_{SUP}** et inférieure **2_{INF}** du compartiment cathodique **2** permet d'éviter que l'électrolyte 4 ne monte trop haut en niveau et ne déborde lors de la phase de charge car le dégagement d'oxygène gazeux produit des bulles à l'intérieur de la batterie, ce qui augmente le niveau de l'électrolyte.

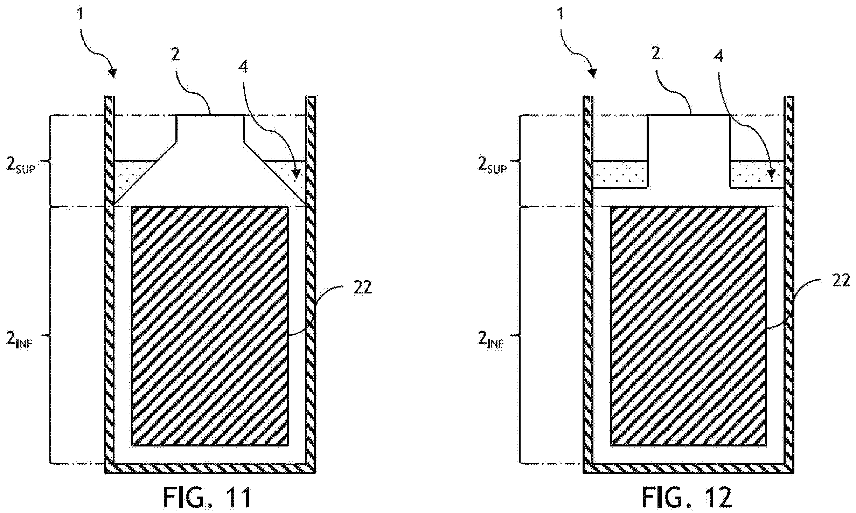

Par exemple, la partie inférieure **2_{INF}** présente une forme rectangulaire et la partie supérieure **2_{SUP}** trapézoïdale, en d'autre terme, les bords de la partie supérieure sont comme découpés en biais de sorte que la section de la partie supérieure **2_{SUP}** diminue au fur et à mesure qu'on s'éloigne de la partie inférieure **2_{INF}**. La section de la partie supérieure **2_{SUP}** peut ensuite demeurer constante (voir figure 11).

Autre exemple, la partie inférieure **2_{INF}** et la partie supérieure **2_{SUP}** présentent une forme rectangulaire formant un épaulement à l'interface entre les deux parties **2_{INF}**, **2_{SUP}** (voir figure 12).

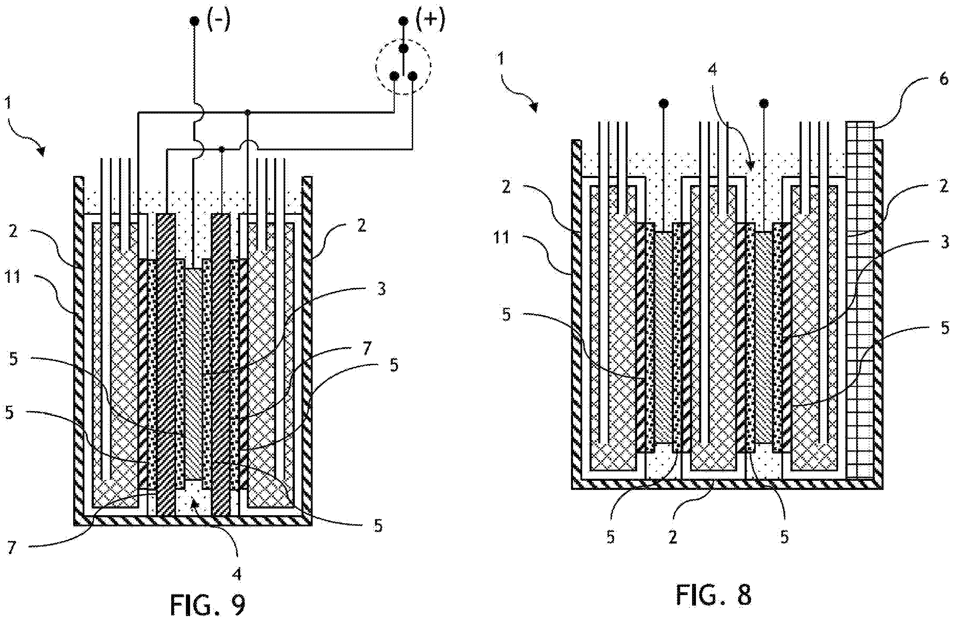

La batterie **1** peut encore comprendre une deuxième électrode positive **7** pour la charge de la batterie **1** (voir figure 9). Cette deuxième électrode positive **7** est de préférence disposée entre l'électrode négative **3** et l'électrode à air **2**. Un séparateur **5,** par exemple sous forme de feutre perméable à l'électrolyte liquide, peut être utilisé entre l'électrode à air **22** et cette deuxième électrode positive **7** et/ou entre l'électrode négative **3** et la deuxième électrode positive **7**.

La deuxième électrode positive **7** peut également être fixée sur la cassette **21** du compartiment cathodique **2** pour faciliter l'insertion ou le retrait de l'électrode à air **22** car il n'y a alors pas besoin de faire attention à l'emplacement d'insertion du compartiment cathodique **2** par rapport à la deuxième électrode positive **7**.

La deuxième électrode positive **7** assure une protection de l'électrode à air **22** pendant la phase de charge de la batterie **1**. En effet, lors de la phase de charge de la batterie **1,** l'électrode à air **22** est déconnectée du pôle positif et la deuxième électrode positive **7** connectée à celui-ci. Ainsi, pendant la phase de charge, l'électrode à air **22** n'est pas utilisée, c'est la deuxième électrode positive **7** qui la remplace. Il peut être décidé que l'électrode à air **22** et la deuxième électrode positive **7** sont utilisées en même temps au début de la charge et que seule la deuxième électrode positive **7** est utilisée quand la tension de charge est supérieure à une valeur donnée. Plus de détails concernant l'utilisation d'une deuxième électrode positive **7** sont donnés par exemple dans le document WO 2012/156639.

Un écarteur **8** peut également être placé au contact de la deuxième électrode positive **7** pour maintenir à distance la deuxième électrode positive **7** des autres éléments de la batterie afin de faciliter l'évacuation des bulles d'oxygène produites sur la deuxième électrode positive **7** lors de la charge. Par exemple, l'écarteur **8** est disposé entre la deuxième électrode positive **7** et l'électrode négative **3** et/ou entre la deuxième électrode positive **7** et l'électrode à air **22**. Cet écarteur **8** est perméable à l'électrolyte quand celui-ci est liquide. Cet écarteur **8** peut être, par exemple, une grille en plastique. La pression de compression sur l'électrode métallique pourra être exercée via l'écarteur **8**. En variante, deux écarteurs **8** peuvent être prévus et disposés de part et d'autre de la deuxième électrode positive **7**.

Dans ce cas, une protection mécanique **9** perméable à l'électrolyte liquide, par exemple un feutre, peut être prévue entre l'écarteur **8** et l'électrode métallique **3** ou l'électrode à air **22** pour protéger l'électrode métallique **3** ou l'électrode à air **22** de l'écarteur.

De manière générale, le nombre de compartiments cathodiques **2** possible et celui d'électrodes métalliques **3** sont adaptés aux besoins. La seule limite imposée est que chaque électrode à air **2** soit couplée à une électrode métallique **3** avec un séparateur **5** entre celles-ci. Des modes de réalisation illustratifs sont décrits ci-après et peuvent être combinés les uns avec les autres. Bien que ces exemples illustratifs font référence à une batterie métal-air, les paragraphes qui suivent peuvent être aisément adaptés à d'autres types de batteries comprenant une électrode à air.

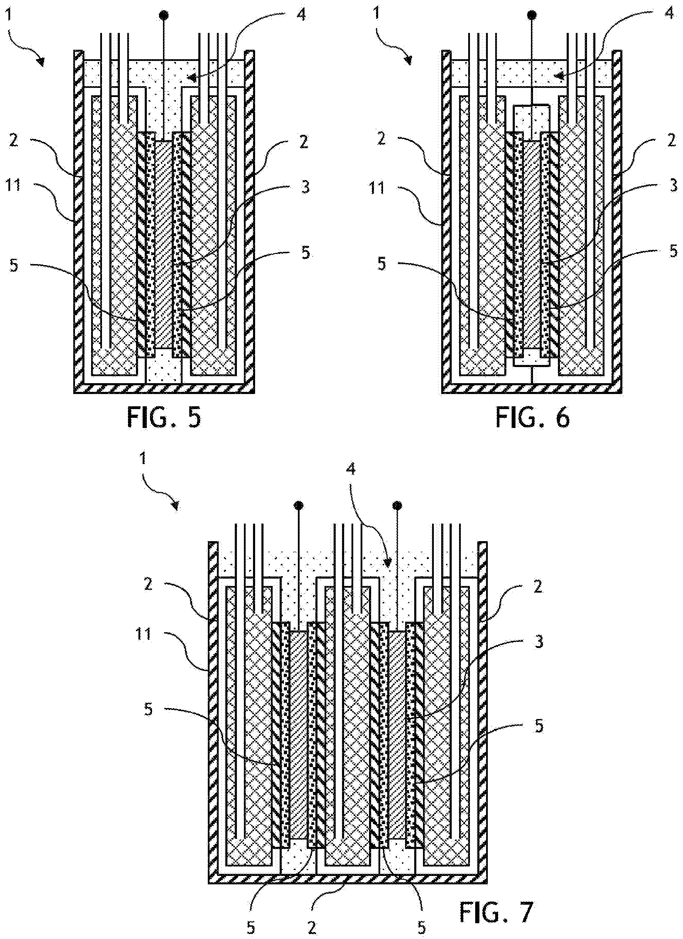

Dans un premier mode de réalisation (figure 5), la batterie **1** comprend deux compartiments cathodiques **2,** chacune présentant une seule électrode à air **22** formant une partie d'une face de la cassette **21,** et un renfort mécanique **26**. La batterie **1** comprend également une électrode métallique **3**. Cette électrode métallique **3** est disposée entre les deux compartiments cathodiques **2** de sorte à être comprimé entre celles-ci.

Dans un deuxième mode de réalisation (figure 6), la batterie **1** est identique au premier mode de réalisation à l'exception du fait que chacun des compartiments cathodiques **2** comprend un rebord **28**. Ces rebords **28** sont disposés de manière à se faire face l'un l'autre.

Dans un troisième mode de réalisation (figure 7), la batterie **1** comprend deux compartiments cathodiques **2,** chacun présentant une seule électrode à air **22** formant au moins une partie d'une face de la cassette **21,** et un renfort mécanique **26**. La batterie **1** comprend en outre un compartiment cathodique **2** présentant deux électrodes à air **22** formant au moins une partie de deux faces opposées de la cassette **21**. La batterie **1** comprend en outre deux électrodes métalliques **3** et quatre séparateurs **5**. Les compartiments cathodiques **2,** les électrodes métalliques **3** et les séparateurs **5** sont disposés dans l'ordre suivant : un premier compartiment cathodique avec une seule électrode à air contre une première paroi du boitier, un premier séparateur, une première électrode métallique, un deuxième séparateur, le compartiment cathodique avec deux électrodes à air, un troisième séparateur, une deuxième électrode métallique, un quatrième séparateur et enfin le deuxième compartiment cathodique avec une seule électrode à air contre une deuxième paroi du boitier opposée à la première paroi.

Dans un quatrième mode de réalisation (figure 8), la batterie **1** est identique au troisième mode de réalisation à l'exception du fait qu'elle comprend en outre un système de compression **6** disposé à la suite du deuxième compartiment cathodique **2,** entre celui-ci et la deuxième paroi du boitier **11**.

Dans un cinquième mode de réalisation (figure 9), la batterie **1** est identique au premier mode de réalisation à l'exception du fait qu'elle comprend en outre deux deuxièmes électrodes positives **7**. Les éléments de la batterie sont disposés à l'intérieur du boitier de manière à se présenter dans l'ordre suivant : un premier compartiment cathodique **2** avec une électrode à air, un premier séparateur **5,** une première deuxième électrode positive **7,** un deuxième séparateur **5**, l'électrode métallique **3,** un troisième séparateur **5,** une deuxième deuxième électrode positive **7,** un quatrième séparateur **5** et un deuxième compartiment cathodique **2** avec une électrode à air.

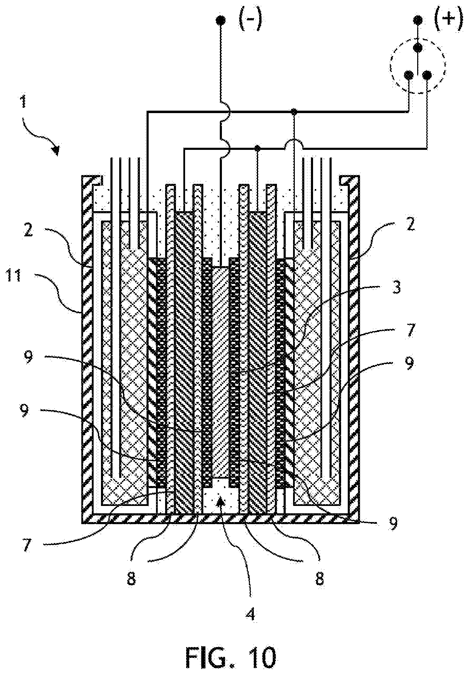

Dans un sixième mode de réalisation (figure 10), la batterie **1** est analogue au cinquième mode de réalisation à l'exception du fait que les séparateurs ont été remplacés par des assemblages comprenant chacun un écarteur **8** et une protection mécanique **9**, l'écarteur **8** étant disposé contre une deuxième électrode positive **7** et la protection mécanique **9** contre une électrode métallique **3** ou une électrode à air **22**.

## Revendications

1. Compartiment cathodique (2) pour batterie à électrode à air, comprenant une électrode à air et adapté pour être inséré dans un boitier de la batterie de manière extractible, dans lequel l'électrode à air est sous forme de plaque, et dans lequel le compartiment cathodique (2) est étanche aux liquides et comprend en outre une connexion électrique (23) pour relier l'électrode à air à un pôle positif d'une batterie, et une cassette (21 ) creuse présentant une arrivée d'air (24) et une sortie d'air (25), avec au moins une face plane formée au moins en partie par l'électrode à air (22), comprenant en outre un rebord (28) sur sa face formée au moins en partie par l'électrode à air (22) de la cassette (21), ledit rebord étant formé vers l'extérieur du compartiment cathodique.

2. Compartiment cathodique (2) selon la revendication 1, comprenant en outre une électrode à air additionnelle (27) sous forme d'une plaque formant au moins en partie une autre face de la cassette (21) creuse, l'autre face étant opposée à la face formée au moins en partie par l'électrode à air (22).

3. Compartiment cathodique (2) selon l'une des revendications 1 à 2, comprenant en outre un renfort mécanique (26) alvéolé disposé à l'intérieur de la cassette (21 ) en appui contre l'électrode à air (22).

4. Compartiment cathodique (2) selon l'une des revendications 1 à 3, présentant une partie inférieure (2_{INF}) et une partie supérieure (2_{SUP}), la partie inférieure (2_{INF}) comprenant la ou les électrodes à air (22, 27) et la partie supérieure (2_{SUP}) ayant au moins une section perpendiculaire au plan de l'électrode à air inférieure à la section de la partie inférieure.

5. Batterie (1) rechargeable comprenant un boitier (11) et à l'intérieur de ce dernier :
- une électrode à air (22) ;
- une électrode négative (3) ; et
- un électrolyte ;
S
dans laquelle l'électrode à air (22) est extractible hors du boitier et intégrée dans un compartiment cathodique (2), ledit compartiment cathodique comprenant électrode à air et étant adapté pour être inséré dans un boitier de la batterie de manière extractible, dans lequel l'électrode à air est sous forme de plaque, et ledit compartiment cathodique (2) étant étanche aux liquides et comprenant en outre une connexion électrique (23) pour relier l'électrode à air à un pôle positif d'une batterie, et une cassette (21) creuse présentant une arrivée d'air (24) et une sortie d'air (25), avec au moins une face plane formée au moins en partie par l'électrode à air (22),
dans laquelle l'électrode négative est une électrode métallique, l'électrolyte un électrolyte liquide, et comprenant en outre un séparateur (5) isolant électriquement entre l'électrode à air (22) et l'électrode métallique (3) et un élément résilient.
dans laquelle le compartiment cathodique (2) est mobile à l'intérieur du boitier (11),
dans laquelle, le séparateur (5), le compartiment cathodique (2) et l'électrode métallique (3) sont agencés de sorte que l'élément résilient agisse sur le compartiment cathodique (2) pour qu'il comprime l'électrode métallique (3) par sa face formée au moins en partie par l'électrode à air (22).

6. Batterie (1) selon la revendication 5, dans laquelle l'élément résilient est formé par le boitier (11) ou est un système de compression (6) disposé contre une paroi du boitier.

7. Batterie (1) selon la revendication 5 ou la revendication 6, comprenant en outre une deuxième électrode à air (22) intégrée dans un deuxième compartiment cathodique (2) mobile et extractible selon l'une des revendications 1 à 4 et un deuxième séparateur (5) entre la deuxième électrode à air (22) et l'électrode métallique (3),
dans laquelle les deux compartiments cathodiques (2), l'électrode métallique (3), les séparateurs (5) et l'élément résilient sont agencés de sorte que l'électrode métallique (3) soit comprimée entre les deux compartiments cathodiques (2) par leurs faces formées au moins en partie par les électrodes à air (22).

8. Batterie (1) selon l'une des revendications 5 à 7, comprenant en outre une deuxième électrode positive (7) pour la charge de la batterie.

9. Batterie (1) selon la revendication 8, dans laquelle la deuxième électrode positive (7) est disposée entre le compartiment cathodique (2) et l'électrode négative (3), et dans laquelle la batterie (1 ) comprend en outre au moins un écarteur (8) placé au contact de la deuxième électrode positive (7) pour faciliter l'évacuation des bulles d'oxygène produites sur la deuxième électrode positive (7) lors de la charge.

10. Batterie (1) selon la revendication 9, comprenant deux écarteurs (8) placés de part et d'autre de l'électrode positive (7).

11. Batterie (1 ) selon la revendication 9 ou la revendication 10, dans laquelle au moins un écarteur (8) est prévu contre une face de la deuxième électrode positive tournée vers l'électrode négative (3), respectivement vers l'électrode à air (22), et comprenant en outre au moins une protection mécanique (9) disposée entre l'écarteur (8) et l'électrode négative (3), respectivement l'électrode à air (22).

## Patentansprüche

1. Kathodenfach (2) für eine Luftelektrodenbatterie, das eine Luftelektrode enthält und dafür ausgelegt ist, in ein Gehäuse der Batterie entnehmbar eingesetzt zu werden, wobei die Luftelektrode die Form einer Platte hat und wobei das Kathodenfach (2) gegenüber Flüssigkeiten dicht ist und außerdem einen elektrischen Anschluss (23), um die Luftelektrode mit einem positiven Pol einer Batterie zu verbinden, und eine hohle Kassette (21), die einen Lufteintritt (24) und einen Luftaustritt (25) aufweist und wovon wenigstens eine ebene Fläche wenigstens teilweise durch die Luftelektrode (22) gebildet ist, umfasst, wobei das Kathodenfach außerdem auf seiner wenigstens teilweise durch die Luftelektrode (22) gebildeten Fläche der Kassette (21) eine Kante aufweist.

2. Kathodenfach (2) nach Anspruch 1, das außerdem eine zusätzliche Luftelektrode (27) in Form einer Platte umfasst, die wenigstens teilweise eine andere Fläche der hohlen Kassette (21) bildet, wobei sich die andere Fläche gegenüber der wenigstens teilweise durch die Luftelektrode (22) gebildeten Fläche befindet.

3. Kathodenfach (2) nach einem der Ansprüche 1 bis 2, das außerdem eine wabenförmige mechanische Verstärkung (26) umfasst, die in der Kassette (21) abgestützt an der Luftelektrode (22) angeordnet ist.

4. Kathodenfach (2) nach einem der Ansprüche 1 bis 3, das einen unteren Teil (2_{INF}) und einen oberen Teil (2_{SUP}) aufweist, wobei der untere Teil (2_{INF}) die eine oder die mehreren Elektroden (22, 27) enthält und der obere Teil (2_{SUP}) wenigstens einen Querschnitt senkrecht zu der Ebene der Luftelektrode besitzt, der kleiner als der Querschnitt des unteren Teils ist.

5. Wiederaufladbare Batterie (1), die ein Gehäuse (11) umfasst und in diesem Letzteren Folgendes enthält:
- eine Luftelektrode (22);
- eine negative Elektrode (3); und
- einen Elektrolyten;
wobei die Luftelektrode (22) aus dem Gehäuse entnehmbar ist und in ein Kathodenfach (2) integriert ist, wobei das Kathodenfach die Luftelektrode umfasst und ausgebildet ist, in ein Gehäuse der Batterie entnehmbar eingesetzt zu werden, wobei die Luftelektrode eine Plattenform aufweist und das Kathodenfach (2) dicht gegenüber Flüssigkeiten ist und außerdem eine elektrische Verbindung (23) umfasst, um die Luftelektrode mit einem Pluspol einer Batterie zu verbinden, und eine Hohlkassette (21) eine Luftzufuhr (24) und einen Luftauslass (25) aufweist, mit mindestens einer flachen Seite, die mindestens teilweise von der Luftelektrode (22) gebildet ist,
wobei die negative Elektrode eine Metallelektrode ist und der Elektrolyt ein flüssiger Elektrolyt ist und die Batterie außerdem einen Separator (5), der die Luftelektrode (22) und die Metallelektrode (3) elektrisch isoliert, und ein elastisches Element umfasst,
wobei das Kathodenfach (2) in dem Gehäuse (11) beweglich ist,
wobei der Separator (5), das Kathodenfach (2) und die Metallelektrode (3) in der Weise angeordnet sind, dass das elastische Element auf das Kathodenfach (2) einwirkt, um die Metallelektrode (3) mit ihrer wenigstens teilweise durch die Luftelektrode (22) gebildeten Fläche zu komprimieren.

6. Batterie (1) nach Anspruch 5, wobei das elastische Element durch das Gehäuse (11) gebildet ist oder ein Kompressionssystem (6) ist, das an einer Wand des Gehäuses angeordnet ist.

7. Batterie (1) nach Anspruch 5 oder Anspruch 6, die außerdem eine zweite Luftelektrode (22), die in ein zweites Kathodenfach (2) beweglich und entnehmbar integriert ist und wie in einem der Ansprüche 1 bis 4 beschaffen ist, und einen zweiten Separator (5) zwischen der zweiten Luftelektrode (22) und der Metallelektrode (3) umfasst,
wobei die zwei Kathodenfächer (2), die Metallelektrode (3), diese Separatoren (5) und das elastische Element in der Weise angeordnet sind, dass die Metallelektrode (3) zwischen den beiden Kathodenfächern (2) mit ihren wenigstens teilweise durch die Luftelektroden (22) gebildeten Flächen komprimiert wird.

8. Batterie (1) nach einem der Ansprüche 5 bis 7, die außerdem eine zweite positive Elektrode (7) zum Laden der Batterie umfasst.

9. Batterie (1) nach Anspruch 8, wobei die zweite positive Elektrode (7) zwischen dem Kathodenfach (2) und der negativen Elektrode (3) angeordnet ist, wobei die Batterie (1) außerdem wenigstens einen Abstandshalter (8) umfasst, der in Kontakt mit der zweiten positiven Elektrode (7) angeordnet ist, um die Abführung von Sauerstoffblasen, die an der zweiten positiven Elektrode (7) während des Ladens erzeugt werden, zu erleichtern.

10. Batterie (1) nach Anspruch 9, die zwei Abstandshalter (8) umfasst, die beiderseits der positiven Elektrode (7) angeordnet sind.

11. Batterie (1) nach Anspruch 9 oder Anspruch 10, in der wenigstens ein Abstandshalter (8) an einer Fläche der zweiten positiven Elektrode vorgesehen ist, die zu der negativen Elektrode (3) bzw. zu der Luftelektrode (22) gewendet ist,
und die außerdem wenigstens einen mechanischen Schutz (9) umfasst, der zwischen dem Abstandshalter (8) und der negativen Elektrode (3) bzw. der Luftelektrode (22) angeordnet ist.

## Claims

1. Cathode compartment (2) for an air electrode battery, comprising an air electrode and being suitable to be inserted into the battery case in an extractible way, in which the air electrode is in the form of a plate, and in which the cathode compartment (2) is liquid-tight and also comprises an electrical connection (23) for connecting the air electrode to a positive terminal of a battery, and a hollow cartridge (21) having an air inlet (24) and an air outlet (25), with at least one flat face formed at least partially by the air electrode (22), also comprising a rim (28) on its face, formed at least partially by the air electrode (22) of the cartridge (21), the rim being formed towards the outside of the cathode compartment.

2. Cathode compartment (2) according to claim 1, also comprising an additional air electrode (27) in the form of a plate at least partially forming another face of the hollow cartridge (21), the other face being opposite to the face formed at least partially by the air electrode (22).

3. Cathode compartment (2) according to one of claims 1 to 2, also comprising a honeycombed mechanical reinforcement (26) arranged inside the cartridge (21) resting against the air electrode (22).

4. Cathode compartment (2) according to one of claims 1 to 3, having a lower part (2_{INF}) and an upper part (2_{SUP}), the lower part (2_{INF}) comprising the air electrode(s) (22, 27) and the upper part (2_{SUP}) having at least one section perpendicular to the plane of the air electrode below the section of the lower part.

5. Rechargeable battery (1) comprising a case (11) and inside the latter:
- an air electrode (22);
- a negative electrode (3); and
- an electrolyte;
in which the air electrode (22) is extractible from the case and incorporated into a cathode compartment (2), the cathode compartment comprising an air electrode and being suitable to be inserted into the battery case in an extractible way, in which the air electrode is in the form of a plate, and in which the cathode compartment (2) is liquid-tight and also comprises an electrical connection (23) for connecting the air electrode to a positive terminal of a battery, and a hollow cartridge (21) having an air inlet (24) and an air outlet (25), with at least one flat face formed at least partially by the air electrode (22),
in which the negative electrode is a metal electrode, the electrolyte a liquid electrolyte, and comprising moreover an electrically insulating separator (5) between the air electrode (22) and the metal electrode (3) and a resilient element,
in which the cathode compartment (2) is moveable within the case (11),
in which the separator (5), the cathode compartment (2) and the metal electrode (3) are arranged so that the resilient element acts on the cathode compartment (2) so that it compresses the metal electrode (3) via its face formed at least partially by the air electrode (22).

6. Battery (1) according to claim 5, in which the resilient element is formed by the case (11) or is a compression system (6) arranged against a wall of the case.

7. Battery (1) according to claim 5 or claim 6, also comprising a second air electrode (22) incorporated into a second moveable cathode compartment (2) and extractible according to one of claims 1 to 4, and a second separator (5) between the second air electrode (22) and the metal electrode (3),
in which the two cathode compartments (2), the metal electrode (3) the separators (5) and the resilient element are arranged so that the metal electrode (3) is compressed between the two cathode compartments (2) via their faces formed at least partially by the air electrodes (22).

8. Battery (1) according to one of claims 5 to 7, also comprising a second positive electrode (7) for charging the battery.

9. Battery (1) according to claim 8, in which the second positive electrode (7) is arranged between the cathode compartment (2) and the negative electrode (3), and in which the battery (1) also comprises at least one spacer (8) placed in contact with the second positive electrode (7) in order to facilitate the removal of the oxygen bubbles produced on the second positive electrode (7) during charging.

10. Battery (1) according to claim 9, comprising two spacers (8) placed one on either side of the positive electrode (7).

11. Battery (1) according to claim 9 or claim 10, in which at least one spacer (8) can be provided against a face of the second positive electrode turned towards the negative electrode (3), respectively towards the air electrode (22),
and also comprising at least one mechanical protection (9) arranged between the spacer (8) and the negative electrode (3), respectively the air electrode (22).
